# FASCICULE DE BREVET EUROPEEN

(11) **EP 0 629 826 B1**
(45) Date de publication et mention de la délivrance du brevet: **10.09.1997**
(21) Numéro de dépôt: 94420170.6
(22) Date de dépôt: 13.06.1994
(51) Int. Cl.: F25D 16/00

(54) **Procédé et dispositif de stockage d'un fluide frigo-porteur en équilibre de fusion**
Verfahren und Vorrichtung zur Speicherung eines Kälteträgermediums am Schmelzpunkt
Method and device for storing a cold carrier fluid at melting point

(30) Priorité: 21.06.1993 FR 9307724
(43) Date de publication de la demande: 21.12.1994
(73) Titulaire: MC INTERNATIONAL, F-78140 Velizy Villacoublay (FR); Laude-Bousquet, Adrien, F-69480 Anse (FR)
(72) Inventeur: Laude-Bousquet, Adrien M., F-69480 Anse (FR)
(74) Mandataire: Guerre, Dominique

(56) Documents cités:
- DE-U- 9 110 982
- FR-A- 2 125 172
- FR-A- 2 408 803
- FR-A- 2 454 599
- US-A- 2 101 953
- US-A- 4 509 344
- US-A- 4 584 843
- US-A- 4 643 212
- US-A- 5 195 850

## Description

La présente invention concerne le stockage d'un fluide frigo-porteur comprenant deux phases d'un même corps en équilibre de fusion, par exemple de l'eau additionnée d'un agent anti-gel, tel que du sel, de l'alcool, du monoéthylène-glycol, ou du monopropylène-glycol. Ce corps en équilibre de fusion peut également être un eutectique. Les fluides frigo-porteurs considérés selon l'invention sont donc obtenus, transportés, et utilisés sous forme diphasique (phase liquide plus phase solide), en particulier dans une consistance homogène proche de celle d'un sorbet.

Conformément au document EP-A-0 427 648, on a déjà décrit, de manière générale, un dispositif de transfert de froid dans une pluralité d'enceintes à refroidir, comprenant un circuit ou boucle de circulation intermédiaire d'un fluide frigo-porteur tel que défini précédemment, un moyen d'échange de chaleur entre le fluide frigo-porteur et un fluide frigorigène, et associé à chaque enceinte à refroidir, un circuit de dérivation comprenant un échangeur de chaleur disposé dans l'enceinte à refroidir, dont l'entrée et la sortie communiquent avec le circuit de circulation intermédiaire.

Toujours selon ce même document, sur le circuit de circulation intermédiaire est branché un récipient isolé thermiquement, "tampon", de génération et stockage du fluide frigo-porteur, à l'état diphasique, et en équilibre de fusion, et dont la proportion de phase solide dépend de la puissance frigorifique consommée dans la boucle de circulation intermédiaire, et/ou de la puissance frigorifique délivrée par le fluide frigorigène. Ce récipient comporte, d'une part un moyen d'introduction du fluide frigo-porteur à stocker, à un niveau situé à la partie inférieure dudit récipient, et d'autre part, un moyen d'extraction du fluide frigo-porteur à déstocker, à un niveau situé en hauteur à la partie supérieure dudit récipient, lesdits moyens d'introduction et d'extraction communiquant chacun avec le circuit de circulation intermédiaire du fluide frigo-porteur. Plus précisément, le moyen d'extraction est équipé d'une vis sans fin d'apport du fluide frigo-porteur, à l'état diphasique homogène, du côté de l'aspiration de la pompe du circuit de circulation intermédiaire du fluide frigo-porteur ; et le moyen d'extraction du fluide frigo-porteur communique avec le circuit intermédiaire, en amont de la jonction entre le moyen d'introduction et le circuit intermédiaire. A ce récipient de stockage est associé un circuit de recyclage diphasique et refroidissement du fluide frigo-porteur, comprenant un point de soutirage en partie inférieure dudit récipient, un point d'introduction du fluide recyclé et refroidi, en partie supérieure dudit récipient, et un moyen de recyclage tel qu'une pompe. A ce circuit de recyclage est associé un groupe frigorifique dans lequel circule un fluide frigorigène, avec un échangeur de chaleur prévu entre le fluide frigo-porteur recyclé et le fluide frigorigène, par exemple en cours de vaporisation ; cet échangeur de chaleur est par exemple un échangeur à surface raclée ou un échangeur multi-tubulaire spécial, permettant de sur-refroidir le fluide frigo-porteur.

En fonctionnement, dans l'enceinte délimitée par le récipient de stockage du fluide frigo-porteur stocké, ce dernier se décante en une couche inférieure relativement liquide et une couche supérieure relativement solide, ayant la consistance de la neige. Le fluide frigo-porteur occupe la totalité du volume disponible dans l'enceinte. On introduit le fluide frigo-porteur à stocker, à partir du circuit de circulation intermédiaire, au niveau de la couche inférieure du fluide frigo-porteur stocké. Et on extrait de l'enceinte le fluide frigo-porteur à déstocker, au niveau de la couche supérieure, grâce à la vis sans fin prévue sur le moyen d'extraction. De manière, d'une part, à maintenir une turbulence entre les deux phases du fluide frigo-porteur favorisant l'homogénéisation, et d'autre part à refroidir en permanence ce dernier, on recycle le fluide frigo-porteur contenu dans l'enceinte de stockage, en soutirant ledit fluide au niveau de sa couche inférieure relativement liquide, et en le réintroduisant au niveau de la couche supérieure relativement solide dans l'enceinte, et ceci en ayant refroidi le fluide recyclé entre son point de soutirage et son point de réintroduction.

Conformément au document US-C 2 101 953, qui est considéré comme montrant l'état de la technique le plus proche et par rapport auquel les revendications 1 et 7 ont été délimitées, on a décrit un procédé de stockage d'un fluide frigo-porteur, en l'occurrence d'une saumure, se distinguant du procédé défini précédemment par référence au fonctionnement d'un dispositif selon le document EP-A-0 427 648, par le fait que, d'une part on établit un ciel gazeux entre la couche supérieure relativement solide du fluide frigo-porteur stocké et la paroi supérieure de l'enceinte de stockage, et d'autre part, on extrait le fluide frigo-porteur à déstocker, à partir d'une zone de soutirage située dans ladite enceinte de stockage au niveau de la couche supérieure précitée.

Conformément aux documents US-C-4 509 344 et US-C-4 584 843, on a décrit, dans le cadre d'une installation complète de réfrigération, un dispositif de stockage d'un fluide frigo-porteur, par exemple d'une saumure, comportant :
- un récipient de stockage, sous la forme d'une cuve ou d'un silo, formant enceinte de stockage du fluide frigo-porteur sous forme diphasique, isolé thermiquement ;
- un moyen d'introduction du fluide frigo-porteur à stocker, à la partie supérieure du récipient, sous la forme d'une rampe distribuant le fluide frigo-porteur sous forme diphasique ;
- et un moyen d'extraction du fluide frigo-porteur à déstocker, uniquement en phase liquide, à la partie inférieure du récipient.

Le fonctionnement d'un tel dispositif de stockage est le suivant :
- dans l'enceinte de stockage isolée thermiquement, le fluide frigo-porteur stocké se décante en une couche inférieure relativement liquide, et une couche supérieure relativement solide ;
- le fluide frigo-porteur à stocker, sous forme diphasique, et par conséquent préalablement refroidi, est introduit et distribué au-dessus de la couche supérieure relativement solide ;
- et on extrait de l'enceinte, le fluide frigo-porteur à déstocker, sous forme liquide uniquement, au niveau de la couche inférieure dudit fluide.

De tels systèmes de transfert de froid permettent de véhiculer une puissance frigorifique très importante, sous un débit relativement faible, grâce à l'utilisation de la chaleur latente de fusion du fluide frigo-porteur. Par exemple, avec un fluide frigo-porteur dont la phase solide représente 30 % en poids, et avec un circuit intermédiaire présentant une section de diamètre égal à 90 mm, on peut disposer d'une puissance frigorifique de 960.000 frigories/heure, avec un débit de 40 m³/heure.

L'association d'un récipient ou enceinte de stockage du fluide frigo-porteur au circuit de circulation intermédiaire de ce dernier, permet de limiter le dimensionnement du circuit intermédiaire, et en particulier du groupe frigorifique, à partir des conditions d'exploitation suivantes :
- pendant la nuit, et en particulier en bénéficiant du tarif de consommation électrique dit "d'heures creuses", on peut générer et stocker du fluide frigo-porteur, exploité ensuite pendant la journée
- le fluide frigorigène stocké, permet d'écrêter les pointes de consommation frigorifique, se produisant par exemple pendant quelques heures pendant une même journée, ou pendant les périodes particulièrement chaudes ou de pleine activité.

Ceci étant, le stockage du fluide frigo-porteur, dans le récipient ou enceinte de stockage pose différents problèmes, liés à sa séparation, comme décrit précédemment, en une couche inférieure relativement liquide et une couche supérieure relativement solide, flottant à la surface de la couche inférieure en quelque sorte.

En pompant la couche supérieure, par le moyen d'extraction du fluide frigo-porteur à déstocker, on obtient ce dernier essentiellement en phase liquide. En effet, la phase solide a tendance à s'agglomérer sous la forme d'une neige compacte, et la phase liquide crée des passages préférentiels dans la masse ainsi formée, de telle sorte que c'est uniquement elle qui est soutirée.

Conformément au document US-C 5 195 850, on a décrit un procédé de transport de la phase solide particulaire d'un fluide frigo-porteur en équilibre de fusion, dans une veine liquide verticale descendante de la phase liquide du fluide frigo-porteur, arrivant au bas et au sein d'une enceinte de stockage du fluide frigo-porteur sous forme diphasique.

Selon ce procédé, dans un cône de déversement, on entraîne la phase solide introduite tangentiellement, par un jet de la phase liquide également introduit tangentiellement, formant ensemble un tourbillon maintenu dans veine verticale descendante, du cône de déversement jusqu'à sa sortie au bas et au sein de l'enceinte.

Un tel procédé est inadapté pour un fluide frigo-porteur stocké sous forme diphasique, et extrait sous cette forme, car il ne permet que d'introduire un fluide diphasique dans une enceinte, par mélange tourbillonnaire de ses phases liquide ou solide, au moment de ladite introduction.

L'invention a pour objet un procédé ou dispositif de stockage d'un fluide frigo-porteur, permettant de manière simple d'extraire ce dernier, sous une forme diphasique homogène, non agglomérée, pouvant être pompée directement comme une phase liquide pure.

La présente invention procède de la découverte selon laquelle, en pratique, le fluide frigo-porteur diphasique a un comportement tixotropique, ce qui veut dire que ce fluide se comporte normalement sous forme relativement visqueuse ou compacte en l'absence d'agitation, et sous forme relativement fluide, à l'état agité ou en mouvement.

Les dispositions selon l'invention font application de cette découverte, selon les modalités définies en revendications 1 et 7.

Ainsi, on ménage, au sein de l'enceinte de stockage et au niveau de la zone de soutirage, un cône de déversement du fluide frigo-porteur stocké. Et on forme un écoulement vertical du fluide à déstocker, ascendant ou descendant, à partir du cône de déversement, générant ainsi une agitation ou turbulence dans le fluide frigo-porteur extrait, à l'endroit du puisage dudit fluide.

Grâce à l'invention, on est assuré de soutirer le fluide frigo-porteur sous forme diphasique homogène, par la conjonction des deux fonctions suivantes :
- le ciel gazeux permet d'isoler la phase solide de la partie supérieure du récipient, en supprimant tout compactage dû à la compression de cette même phase sur le haut du récipient
- l'écoulement avec agitation ou turbulence du fluide frigo-porteur prélevé et déstocké, fluidifie ce dernier au fur et à mesure de son soutirage, et ceci à l'endroit même du puisage.

La présente invention est maintenant décrite par référence au dessin annexé, dans lequel :
- la figure 1 représente un premier mode d'exécution de l'invention, sous forme schématique
- la figure 2 représente un deuxième mode d'exécution de l'invention, toujours de manière schématique
- la figure 3 représente selon un troisième mode d'exécution de l'invention, le récipient de stockage appartenant à un dispositif selon l'invention.

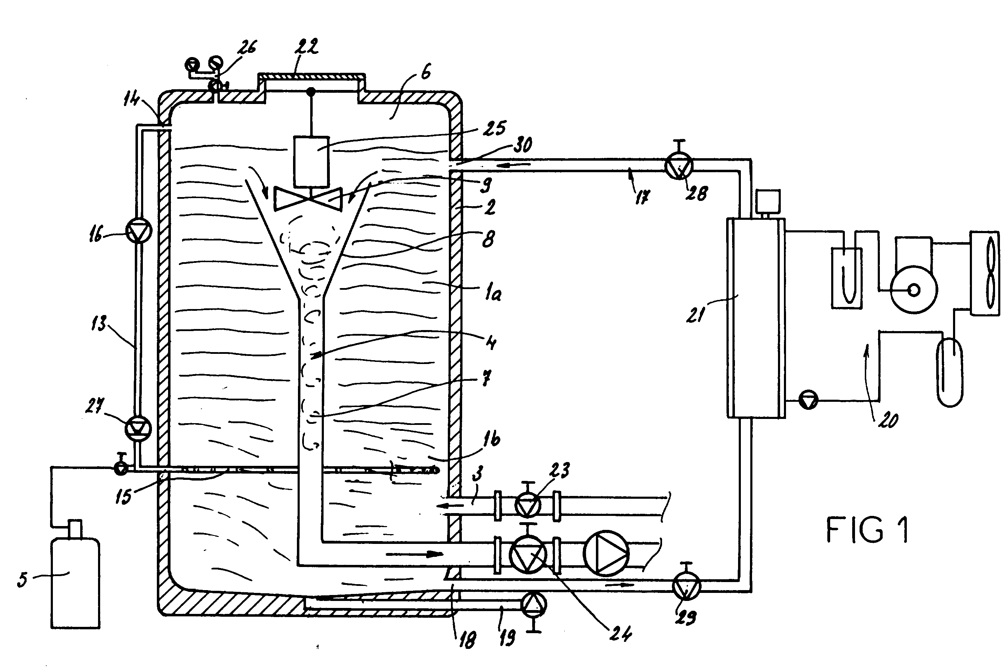

Conformément à la figure 1, un dispositif de stockage selon l'invention comprend :
- un récipient 2 de stockage du fluide frigo-porteur 1, formant enceinte de stockage de ce dernier, isolé thermiquement ; ce récipient est équipé éventuellement à sa partie supérieure d'une porte de visite 22
- un moyen 3 d'introduction du fluide frigo-porteur à stocker, en provenance du circuit de circulation intermédiaire du fluide frigo-porteur ; ce moyen consiste en un simple piquage à la partie inférieure du récipient 2, contrôlé par une vanne 23
- un moyen d'extraction 4 du fluide frigo-porteur à déstocker, par descente vers le bas, disposé verticalement à l'intérieur du récipient 2, et comprenant un conduit vertical 7 contrôlé par une vanne de sortie 24, se terminant en partie supérieure, par un cône 8 en forme d'entonnoir de déversement du fluide frigo-porteur ; éventuellement un moyen d'agitation 9, sous forme de pales, mû par un moteur 25 est disposé et agit à l'intérieur du cône de déversement 8
- une source gazeuse 5 associée au récipient 2, par l'entremise d'un circuit 13 de recyclage gazeux ; ce dernier comprend un point 14 de piquage en partie supérieure du récipient 2, un moyen d'injection 15 sous la forme d'une rampe perforée orientant l'atmosphère recyclée vers les parois du récipient 2, en partie inférieure de ce dernier, et un moyen 16 de circulation de l'atmosphère gazeuse recyclée entre le point de piquage 14 et le moyen d'injection 15, la source gazeuse 5, sous la forme d'une bouteille d'un gaz inerte sous pression, étant branchée sur le circuit de recyclage en aval du moyen de circulation 16 ; l'injection de l'atmosphère gazeuse recyclée peut être faîte à différents niveaux du récipient 2, suivant la concentration en phase solide du fluide diphasique selon la hauteur
- différents organes de contrôle de la circulation gazeuse, comprenant d'une part, en partie supérieure du récipient 2 un piquage 26, contrôlé par une vanne en relation avec un manomètre et une soupape de sécurité, et d'autre part un clapet anti-retour 27, prévu sur le circuit de recyclage 13, empêchant tout retour de phase liquide et/ou solide dans le récipient 2
- un circuit 17 de recyclage diphasique du fluide frigo-porteur, comprenant un point 18 de soutirage en partie inférieure du récipient, et un moyen 30 de réintroduction tangentielle du fluide recyclé, propre à générer un tourbillon dans la couche supérieure 1a, situé en partie supérieure du récipient, à l'écart du point de soutirage 18 ; ce circuit de recyclage est contrôlé par des vannes 28 et 29
- un groupe frigorifique 20 associé au récipient 2 de stockage, dans lequel circule un fluide frigorigène, avec un échangeur de chaleur 21, à surface raclée, entre le fluide frigo-porteur recyclé et le fluide frigorigène
- un conduit de vidange 19 du récipient 2.

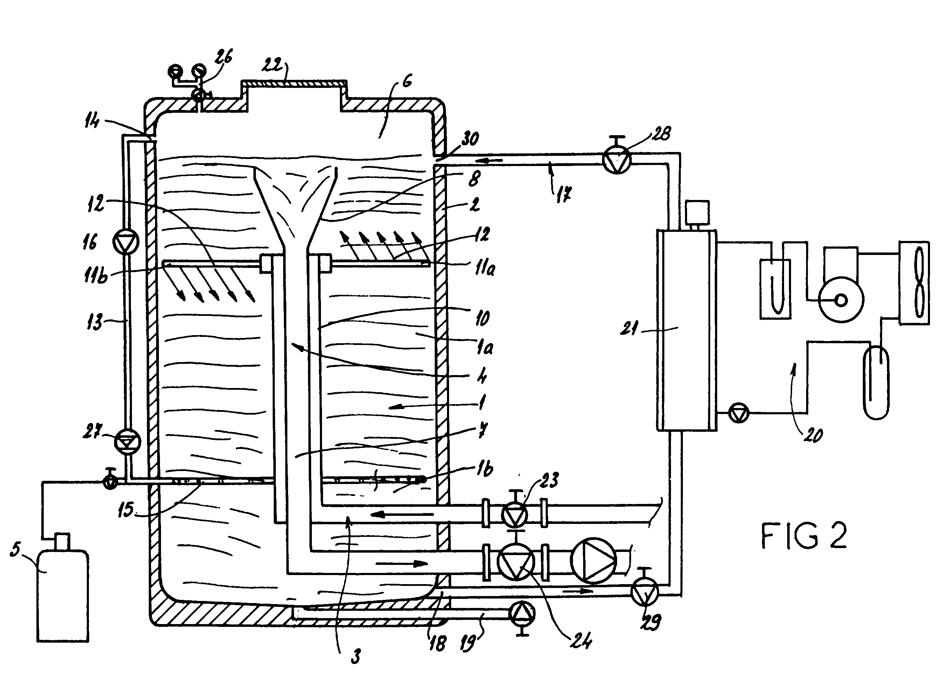

Le dispositif représenté à la figure 2, selon un deuxième mode d'exécution de l'invention, diffère du premier, par le fait que le moyen d'introduction 3 du fluide frigo-porteur comprend un conduit vertical 10, concentrique avec le conduit vertical 7 d'extraction du fluide frigo-porteur, et se termine en partie supérieure du récipient 2, par un moyen 11 d'éjection du fluide frigo-porteur introduit. Plus précisément, ce moyen d'éjection 11 consiste en deux rampes alignées 11a et 11b, tournant autour d'un seul et même axe vertical correspondant aux conduits 7 et 10, pourvues chacune d'une pluralité de buses 12 d'éjection selon une direction horizontale et/ou verticale. Les sens d'éjection des rampes 11a et 11b sont respectivement opposés, de manière à générer une rotation desdites rampes, au moment de l'introduction du fluide frigo-porteur dans le récipient 2.

Grâce aux dispositifs décrits respectivement par référence aux figures 1 et 2, en fonctionnement :
- dans le récipient 2 formant enceinte de stockage, le fluide frigo-porteur stocké se décante en une couche inférieure 1b relativement liquide, et une couche supérieure 1a relativement solide
- on introduit le fluide frigo-porteur à stocker, soit à la partie inférieure du récipient (cf figure 1), soit au centre et en partie supérieure (cf figure 2), après l'avoir dirigé verticalement, avec agitation et brassage de la couche supérieure relativement solide, grâce à la rotation de la rampe 11a-11b, et l'action des jets horizontaux et/ou verticaux du fluide frigo-porteur
- par l'action conjointe de la source gazeuse 5 et du circuit de recyclage 13 gazeux, on établit un ciel gazeux 6 entre la couche supérieure 1a et la paroi supérieure de l'enceinte 2
- on extrait de l'enceinte le fluide frigo-porteur à déstocker, au niveau de la couche supérieure 1a, au niveau de l'interface entre la couche supérieure 1a et le ciel gazeux 6 ; le cône 8 de déversement du fluide frigo-porteur stocké se trouve donc au sein de l'enceinte 2 de stockage, dans une zone de soutirage au niveau de l'interface précitée, avec sa section décroissante dirigée vers le bas ; et on forme dans le conduit 7, un écoulement vertical du fluide à déstocker, descendant ou ascendant, à partir du cône 8, en générant, par la seule interaction de l'écoulement vertical vis-à-vis du cône 8, une agitation ou turbulence dans le fluide frigo-porteur extrait, sur au moins une partie de l'écoulement, c'est-à-dire du conduit 7.

Selon le mode d'exécution propre à la figure 2, le fluide frigo-porteur est introduit dans une zone d'entrée située dans l'enceinte de stockage, au niveau de la couche supérieure 1a, par un écoulement vertical ascendant dans le conduit 10, succédant à l'introduction en partie inférieure du récipient 2, se terminant par une distribution 11 du fluide frigo-porteur selon une pluralité de jets.

En permanence, d'une part on recycle l'atmosphère gazeuse présente dans le ciel gazeux 6 dans l'enceinte 2 de stockage, à un niveau situé en hauteur, au moins au niveau de la couche inférieure 1b, et d'autre part on recycle dans l'enceinte de stockage 2, le fluide frigo-porteur soutiré au niveau de la couche 1b inférieure, en le réintroduisant dans l'enceinte 2, au niveau de la couche supérieure 1a selon la figure 1, et tangentiellement. Ces deux dispositions de recyclage sont à même de développer et maintenir un état turbulent ou agité à l'intérieur de l'enceinte de stockage.

Bien entendu, le dimensionnement du cône de déversement 8 et du conduit vertical 7 est calculé et déterminé de manière à pouvoir véhiculer sans blocage ou obstruction le fluide diphasique homogène, avec une vitesse suffisante.

Les brassages ou turbulences entretenus dans le récipient 2, tant en raison du recyclage du fluide frigo-porteur que de celui de l'atmosphère gazeuse, mais aussi en raison de la localisation et du mode d'introduction de ces derniers, ont pour effet de faire remonter une partie de la phase liquide en surface, et de disloquer la phase solide, notamment en périphérie du réservoir.

En cas d'obstruction du récipient de stockage, le branchement direct de la source gazeuse 5 sous pression sur le récipient, par le moyen d'introduction 15, permet de créer une surpression importante, à même de disloquer la phase solide compacte, pour permettre un nouveau brassage et la remontée de la phase liquide.

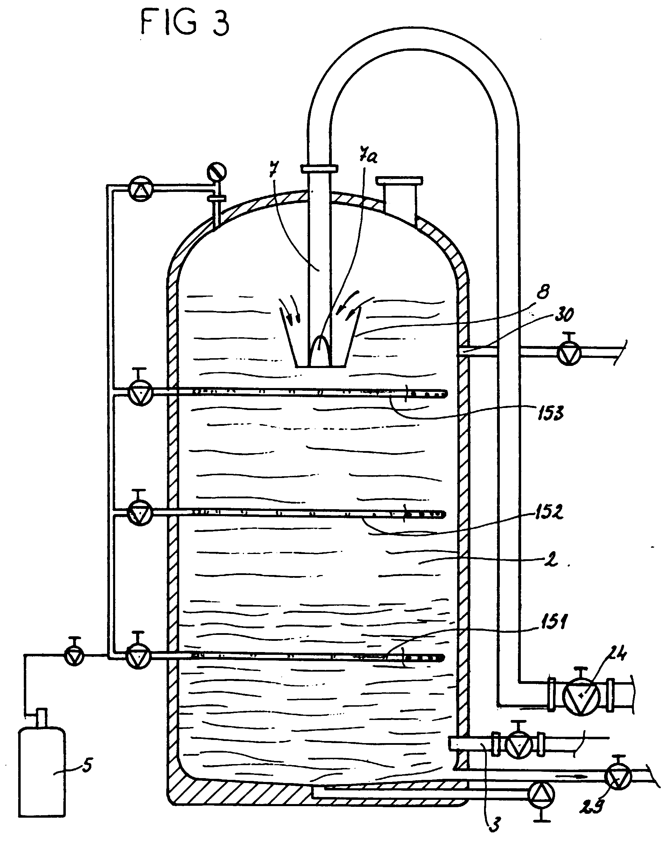

Selon la figure 3, le fluide frigo-porteur est extrait en partie haute de la cuve 2, par aspiration par le haut, en relation avec un cône 8 de déversement, suspendu à l'extrémité du conduit vertical 7. Cette extrémité communique par des ouvertures 7a avec l'intérieur du cône 8.

Selon la figure 3, l'atmosphère gazeuse est recyclée par trois rampes d'injection 151 à 153, étagées selon la hauteur du récipient 2.

## Revendications

1. Procédé de stockage d'un fluide frigo-porteur (1) comprenant deux phases (1a,1b) d'un même corps en équilibre de fusion, selon lequel :
- on dispose d'une enceinte (2) de stockage dudit fluide, isolée thermiquement, dans laquelle le fluide frigo-porteur stocké se décante en une couche inférieure (1b) relativement liquide, et une couche supérieure (1a) relativement solide ;
- on introduit dans l'enceinte (2) le fluide frigo-porteur à stocker ;
- on établit un ciel gazeux (6) entre la couche supérieure (1a) et la paroi supérieure de l'enceinte (2) ;
- et on extrait le fluide frigo-porteur à déstocker, à partir d'une zone de soutirage située dans l'enceinte de stockage au niveau de la couche supérieure (1a) ;
**caractérisé en ce qu'**on ménage, au sein de l'enceinte et au niveau de la zone de soutirage, un cône (8) de déversement du fluide frigo-porteur stocké, et on forme un écoulement vertical du fluide à déstocker, ascendant ou descendant, à partir du cône de déversement, générant ainsi une agitation ou turbulence dans le fluide frigo-porteur extrait à l'endroit du puisage dudit fluide.

2. Procédé selon la revendication 1, caractérisé en ce que l'on extrait le fluide frigo-porteur à déstocker, par au moins l'un des modes suivants d'écoulement vertical, à savoir une aspiration par le haut et une descente vers le bas dudit fluide.

3. Procédé selon la revendication 2, caractérisé en ce que, après avoir introduit le fluide frigo-porteur à stocker dans l'enceinte (2), on dirige ce dernier verticalement, et on le distribue selon une pluralité de jets dirigés horizontalement et/ou verticalement.

4. Procédé selon la revendication 1, caractérisé en ce qu'on recycle l'atmosphère gazeuse présente dans le ciel gazeux (6) dans l'enceinte (2) de stockage, au moins au niveau de la couche inférieure (1b).

5. Procédé selon la revendication 1, caractérisé en ce qu'on recycle l'atmosphère gazeuse, présente dans le ciel gazeux (6) dans l'enceinte (2) de stockage, sur plusieurs niveaux (151,152,153) étagés dans l'enceinte.

6. Procédé selon la revendication 1, caractérisé en ce qu'on recycle dans l'enceinte (2) de stockage le fluide frigo-porteur, et à cette fin, on soutire ledit fluide au niveau de la couche inférieure (1b), on refroidit le fluide soutiré à l'extérieur de l'enceinte (2), et on réintroduit dans l'enceinte de stockage le fluide frigo-porteur refroidi, au niveau de la couche supérieure (1a).

7. Dispositif de stockage d'un fluide frigo-porteur (1) comprenant deux phases (1a,1b) d'un même corps en équilibre de fusion, comportant :
- un récipient (2) de stockage formant enceinte de stockage dudit fluide, isolé thermiquement ;
- un moyen (3) d'introduction du fluide frigo-porteur à stocker;
- un moyen d'extraction (4) du fluide frigo-porteur à déstocker, à un niveau situé en hauteur à la partie supérieure du récipient ;
caractérisé en ce qu'en combinaison, d'une part une source gazeuse (5) est associée au récipient, pour établir un ciel gazeux (6) à la partie supérieure dudit récipient, et d'autre part, le moyen d'extraction (4) est disposé verticalement à l'intérieur du récipient, et comprend un conduit vertical (7) se terminant par un cône (8) de déversement du fluide frigo-porteur stocké, apte à agiter ou à rendre turbulent ledit fluide lors du puisage de ce dernier.

8. Dispositif selon la revendication 7, caractérisé en ce que le moyen d'extraction (4) du fluide frigo-porteur à déstocker comporte un moyen d'agitation (9) agissant à l'intérieur du cône de déversement.

9. Dispositif selon la revendication 8, caractérisé en ce que le moyen (3) d'introduction du fluide frigo-porteur à stocker comprend un conduit vertical (10) se terminant en partie supérieure du récipient par un moyen (11) d'éjection dudit fluide.

10. Dispositif selon la revendication 9, caractérisé en ce que le moyen (11) d'éjection du fluide frigo-porteur à stocker comprend une rampe (11a, 11b), éventuellement rotative autour d'un axe vertical, pourvue d'une pluralité de buses (12) d'éjection du fluide frigo-porteur, selon une direction horizontale et/ou verticale.

11. Dispositif selon la revendication 8, caractérisé en ce qu'il comprend un circuit (13) de recyclage gazeux associé à la source gazeuse (5) , comprenant un point (14) de piquage en partie supérieure du récipient, au moins un moyen d'injection (15;151,152,153) de l'atmosphère gazeuse recyclée, notamment une rampe, en partie inférieure du récipient, et un moyen de circulation (16) de l'atmosphère gazeuse recyclée entre le point de piquage et le point d'injection, la source gazeuse (5) étant branchée sur le circuit de recyclage.

12. Dispositif selon la revendication 11, caractérisé en ce que le circuit (13) du recyclage gazeux comprend plusieurs moyens (151,152,153) d'injection, disposés respectivement à plusieurs niveaux étagés dans le récipient (2).

13. Dispositif selon la revendication 7, comprenant un circuit (17) de recyclage et refroidissement du fluide frigo-porteur, à l'extérieur du récipient (2) de stockage, comprenant un point (18) de soutirage en partie inférieure du récipient, et un moyen (30) d'introduction du fluide frigo-porteur refroidi, situé en partie supérieure du récipient, à l'écart du point de soutirage (18), par exemple un moyen d'introduction tangentielle dudit fluide frigo-porteur.

14. Dispositif selon la revendication 13, caractérisé en ce qu'il comprend un groupe frigorigène (20) associé au circuit de recyclage, dans lequel circule un fluide frigorigène, avec un échangeur de chaleur (21) entre le fluide frigo-porteur recyclé et le fluide frigorigène.

## Patentansprüche

1. Verfahren zur Speicherung eines Kälteträgerfluids (1), das zwei Phasen (1a, 1b) eines selben, sich im Schmelzgleichgewicht befindenden Körpers enthält, gemäß dem:
- ein wärmeisolierter Speicherbehälter (2) für das Fluid bereitgestellt wird, in dem sich das gespeicherte Kälteträgerfluid in einer unteren relativ flüssigen Schicht (1b) und einer oberen relativ festen Schicht (1a) absetzt;
- in den Behälter (2) das zu speichernde Kälteträgerfluid eingeführt wird;
- ein Gashimmel (6) zwischen der oberen Schicht (1a) und der oberen Wand des Behälters (2) gebildet wird;
- und das aus der Speicherung zu entnehmende Kälteträgerfluid von einem in dem Speicherbehälter im Bereich der oberen Schicht (1a) gelegenen Abziehbereich ausgehend entnommen wird,
dadurch gekennzeichnet, daß innerhalb des Behälters im Bereich des Abziehbereiches ein Austragtrichter (8) für das gespeicherte Kälteträgerfluid angeordnet wird, und daß eine vertikale, auf- oder absteigende Strömung des aus der Speicherung zu entnehmenden Fluids von dem Austragtrichter ausgehend gebildet wird, wodurch eine heftige Bewegung oder Turbulenz in dem entnommenen Kältemittel an der Abzapfstelle des Fluids erzeugt wird.

2. Verfahren nach Anspruch 1, dadurch gekennzeichnet, daß das aus der Speicherung zu entnehmende Kälteträgerfluid durch zumindest eine der folgenden Arten der vertikalen Strömung entnommen wird, und zwar durch ein Ansaugen des Fluids von oben und durch ein Herabfließen nach unten.

3. Verfahren nach Anspruch 2, dadurch gekennzeichnet, daß das zu speichernde Kälteträgerfluid nach dem Einführen in den Behälter vertikal geleitet wird und gemäß einer Vielzahl von horizontal und/oder vertikal gerichteten Strahlen verteilt wird.

4. Verfahren nach Anspruch 1, dadurch gekennzeichnet, daß die in dem Gashimmel (6) vorhandene Gasatmosphäre zumindest im Bereich der unteren Schicht (1b) in den Speicherbehälter (2) zurückgeführt wird.

5. Verfahren nach Anspruch 1, dadurch gekennzeichnet, daß die in dem Gashimmel (6) vorhandenen Gasatmosphäre in mehreren, etagenweise in dem Behälter angeordneten Bereichen (151, 152, 153) in den Speicherbehälter (2) zurückgeführt wird.

6. Verfahren nach Anspruch 1, dadurch gekennzeichnet, daß das Kälteträgerfluid in den Speicherbehälter (2) zurückgeführt wird, und daß dazu das Fluid im Bereich der unteren Schicht (1b) abgezogen wird, daß das abgezogene Fluid außerhalb des Behälters (2) abgekühlt wird, und daß das abgekühlte Kälteträgerfluid im Bereich der oberen Schicht (1a) in den Speicherbehälter zurückgeführt wird.

7. Vorrichtung zur Speicherung eines Kälteträgerfluids (1), das zwei Phasen (1a, 1b) eines sich im Schmelzgleichgewicht befindenden Körpers aufweist, mit:
- einem wärmeisolierten Speichergefäß (2), das den Speicherbehälter für das Fluid bildet;
- einem Mittel (3) zum Einführen des zu speichernden Kälteträgerfluids;
- einem Mittel (4) zum Entnehmen des aus der Speicherung zu entnehmenden Kälteträgerfluids in einem Bereich, der bezüglich der Höhe im oberen Abschnitt des Gefäßes liegt;
dadurch gekennzeichnet, daß einerseits eine Gasquelle (5) mit dem Gefäß in Verbindung steht, um einen Gashimmel (6) im oberen Abschnitt des Gefäßes zu bilden, und daß in Kombination damit andererseits das Mittel (4) zum Entnehmen vertikal verlaufend im Inneren des Gefäßes angeordnet ist und einen vertikalen Kanal (7) umfaßt, der in einem Austragtrichter (8) für das gespeicherte Kälteträgerfluid endet, der in der Lage ist, das Fluid während des Abzapfens in heftige Bewegung oder Turbulenz zu versetzen.

8. Vorrichtung nach Anspruch 7, dadurch gekennzeichnet, daß das Mittel (4) zum Entnehmen des aus der Speicherung zu entnehmenden Kälteträgerfluids ein Mittel (9) zum Verwirbeln aufweist, das im Inneren des Austragtrichters wirkt.

9. Vorrichtung nach Anspruch 8, dadurch gekennzeichnet, daß das Mittel (3) zum Einführen des zu speichernden Kälteträgerfluids einen vertikalen Kanal (10) aufweist, der im oberen Abschnitt des Gefäßes in einem Mittel (11) zum Ausstoßen des Fluids endet.

10. Vorrichtung nach Anspruch 9, dadurch gekennzeichnet, daß das Mittel (11) zum Ausstoßen des zu speichernden Kälteträgerfluids einen Sprüharm (11a, 11b) umfaßt, der gegebenenfalls um eine vertikale Achse drehbar ist, und der mit einer Vielzahl von Spritzdüsen (12) zum Ausstoßen des Kälteträgerfluids in horizontaler und/oder vertikaler Richtung versehen ist.

11. Vorrichtung nach Anspruch 8, dadurch gekennzeichnet, daß sie einen mit der Gasquelle (5) in Verbindung stehenden Kreislauf (13) zur Zurückführung des Gases umfaßt, der eine Anschlußstelle (14) im oberen Abschnitt des Gefäßes, zumindest ein Mittel (15; 151, 152, 153) zum Einspritzen der zurückgeführten Gasatmosphäre, insbesondere einen Sprüharm, im unteren Abschnitt des Gefäßes und ein Mittel (16) zum Umwälzen der zurückgeführten Gasatmosphäre zwischen der Anschlußstelle und der Einspritzstelle umfaßt, wobei die Gasquelle (5) an den Rückführungskreislauf angeschlossen ist.

12. Vorrichtung nach Anspruch 11, dadurch gekennzeichnet, daß der Kreislauf (13) zur Rückführung des Gases mehrere Einspritzmittel (151, 152, 153) umfaßt, die jeweils in mehreren, etagenweise in dem Gefäß (2) angeordneten Bereichen angeordnet sind.

13. Vorrichtung nach Anspruch 7, wobei die Vorrichtung einen Kreislauf (17) zur Zurückführung und zum Abkühlen des Kälteträgerfluids außerhalb des Speichergefäßes (2) umfaßt, der eine Abziehstelle (18) im unteren Abschnitt des Gefäßes und ein sich im oberen Abschnitt des Gefäßes fern von der Abziehstelle (18) befindendes Mittel (30) zum Einführen des abgekühlten Kälteträgerfluids umfaßt, beispielsweise ein Mittel zum tangentialen Einführen des Kälteträgerfluids.

14. Vorrichtung nach Anspruch 13, dadurch gekennzeichnet, daß sie ein mit dem Rückführungskreislauf in Verbindung stehendes Kühlaggregat (20) umfaßt, in dem ein Kältemittel zirkuliert, wobei ein Wärmetauscher (21) zwischen dem zurückgeführten Kälteträgerfluid und dem Kältemittel vorgesehen ist.

## Claims

1. Method for storing a coolant fluid (1) comprising two phases (1a, 1b) of one and the same substance in melting equilibrium, according to which:
- a thermally isolated enclosure (2) for storing the said fluid is used, in which the coolant fluid stored settles into a lower, relatively liquid, layer (1b) and an upper, relatively solid, layer (1a);
- the coolant fluid to be stored is introduced into the enclosure (2);
- a gaseous headspace (6) is set up between the upper layer (1a) and the upper wall of the enclosure (2);
- and the coolant fluid to be removed from storage is extracted from a withdrawal zone located in the storage enclosure at the level of the upper layer (1a);
characterized in that a cone (8) for pouring out the coolant fluid stored is made, within the enclosure and at the level of the withdrawal zone, and an ascending or descending vertical flow of the fluid to be removed from storage is formed, starting from the pouring cone, thus generating agitation or turbulence in the coolant fluid extracted, at the location where said fluid is drawn off.

2. Method according to Claim 1, characterized in that the coolant fluid to be removed from storage is extracted by at least one of the following vertical flow modes, namely upward suction and downward descent of said fluid.

3. Method according to Claim 2, characterized in that after having introduced the coolant fluid to be stored in the enclosure (2), this fluid is directed vertically and it is distributed in a plurality of horizontally and/or vertically directed jets.

4. Method according to Claim 1, characterized in that the gaseous atmosphere present in the gaseous headspace (6) is recycled into the storage enclosure (2), at least at the level of the lower layer (1b).

5. Method according to Claim 1, characterized in that the gaseous atmosphere present in the gaseous headspace (6) is recycled into the storage enclosure (2), on several staged levels (151, 152, 153) in the enclosure.

6. Method according to Claim 1, characterized in that the coolant fluid is recycled into the storage enclosure (2) and, for this purpose, said fluid is withdrawn at the level of the lower layer (1b), the fluid withdrawn is cooled outside the enclosure (2), and the cooled coolant fluid is reintroduced into the storage enclosure at the level of the upper layer (1a).

7. Device for storing a coolant fluid (1) comprising two phases (1a, 1b) of one and the same substance in melting equilibrium including:
- a thermally isolated storage container (2) forming a storage enclosure for said fluid;
- a means (3) for introducing the coolant fluid to be stored;
- a means (4) for extracting the coolant fluid to be removed from storage, at a level located in height at the upper part of the container;
characterized in that in combination, on the one hand a gas source (5) is associated with the container for setting up a gaseous headspace (6) at the upper part of said container and, on the other hand, the extraction means (4) is arranged vertically inside the container, and comprises a vertical pipe (7) ending in a pouring cone (8) for the coolant fluid stored, capable of agitating said fluid or making it turbulent when it is drawn off.

8. Device according to Claim 7, characterized in that the means (4) for extracting the coolant fluid to be removed from storage comprises an agitation means (9) acting inside the pouring cone.

9. Device according to Claim 8, characterized in that the means (3) for introducing the coolant fluid to be stored comprises a vertical pipe (10) ending at the upper part of the container in a means (11) for ejecting the said fluid.

10. Device according to Claim 9, characterized in that the means (11) for ejecting the coolant fluid to be stored comprises a boom (11a, 11b), optionally rotary about a vertical axis, provided with a plurality of nozzles (12) for ejecting the coolant fluid, in a horizontal and/or vertical direction.

11. Device according to Claim 8, characterized in that it comprises a gas recycling circuit (13) associated with the gas source (5), comprising a take-off point (14) in the upper part of the container, at least one means (15; 151, 152, 153) for injecting the recycled gaseous atmosphere, especially a boom, in the lower part of the container, and a means (16) for circulating the recycled gaseous atmosphere between the take-off point and the injection point, the gas source (5) being connected onto the recycling circuit.

12. Device according to Claim 11, characterized in that the gas recycling circuit (13) comprises several injection means (151, 152, 153), arranged respectively at several staged levels in the container (2).

13. Device according to Claim 7, comprising a circuit (17) for recycling and cooling the coolant fluid outside the storage container (2), comprising a withdrawal point (18) in the lower part of the container, and a means (30) for introducing the cooled coolant fluid, located in the upper part of the container, away from the withdrawal point (18), for example a means for tangential introduction of the said coolant fluid.

14. Device according to Claim 13, characterized in that it comprises a refrigeration unit (20) associated with the recycling circuit, in which a refrigerant fluid circulates, with a heat exchanger (21) between the recycled coolant fluid and the refrigerant fluid.
